# EUROPÄISCHE PATENTSCHRIFT

(11) **EP 0 861 284 B1**
(45) Veröffentlichungstag und Bekanntmachung des Hinweises auf die Patenterteilung: **24.05.2000**
(21) Anmeldenummer: 96938204.3
(22) Anmeldetag: 14.11.1996
(51) Int. Cl.: C08J 3/12, C08L 83/04

(54) **VERFAHREN ZUR HERSTELLUNG VON IN WASSER REDISPERGIERBAREN, ORGANOSILICIUMVERBINDUNGEN ENTHALTENDEN PULVERZUSAMMENSETZUNGEN**
PROCESS FOR THE PREPARATION OF POWDER COMPOSITIONS CONTAINING ORGANOSILICON COMPOUNDS AND REDISPERSIBLE IN WATER
PROCEDE DE PREPARATION DE COMPOSITIONS PULVERULENTES REDISPERSABLES DANS L'EAU, CONTENANT DES COMPOSES ORGANO-SILICIQUES

(30) Priorität: 14.11.1995 DE 19542442
(43) Veröffentlichungstag der Anmeldung: 02.09.1998
(73) Patentinhaber: Wacker-Chemie GmbH, 81737 München (DE)
(72) Erfinder: ECK, Herbert, D-84489 Burghausen (DE); FIGGE, Reiner, D-84539 Ampfing (DE); WEIDNER, Richard, D-84489 Burghausen (DE)
(74) Vertreter: Schuderer, Michael, Dr.
(86) Internationale Anmeldenummer: EP9604998
(87) Internationale Veröffentlichungsnummer: WO9718258

(56) Entgegenhaltungen:
- EP-A- 0 228 657
- EP-A- 0 279 373
- EP-A- 0 680 993

## Beschreibung

Die Erfindung betrifft ein Verfahren zur Herstellung von in Wasser redispergierbaren, Organosiliciumverbindungen enthaltenden Pulverzusammensetzungen.

In Wasser redispergierbare Organosiliciumverbindungen enthaltende Pulverzusammensetzungen sind beispielsweise aus der EP-A 228657 (US-A 4704416) und der EP-A 279373 bekannt.

In der EP-A 228657 sind redispergierbare, Organosiliciumverbindungen enthaltende Pulver beschrieben, welche in Gegenwart von wasserlöslichem Organopolymer durch Sprühtrocknung hergestellt werden. Dazu werden die Organosiliciumverbindungen im Gemisch mit dem Organopolymer verdüst. Zur Verbesserung der Blockfestigkeit des Redispersionspulvers wird vorgeschlagen, während der Sprühtrocknung, die Gesamtmenge an Antiblockmittel getrennt von der zu trocknenden wäßrigen Mischung in den Sprühtrockner zu dosieren.

Die EP-A 279373 betrifft in Wasser redispergierbare Organo(poly)siloxane enthaltende Pulver, welche in Gegenwart von wasserlöslichem Organopolymer mit einem Trübungspunkt von 35°C bis 98°C durch Sprühtrocknung hergestellt werden. Zur Verbesserung der Blockfestigkeit werden dem Pulver Antiblockmittel zugesetzt. Dazu werden folgende drei Alternativen für die Antiblockmittelzugabe beschrieben: Das Antiblockmittel wird zusammen mit Organosiliciumpolymer und Organopolymer der zu trocknenden wäßrigen Mischung zugegeben und als Mischung verdüst; es wird getrennt von der wäßrigen Mischung während der Sprühtrocknung zudosiert; es wird vor Austritt des getrockneten Pulvers in den unteren Teil des Sprühtrocknungsturm dosiert.

Eine weitere Möglichkeit zur Zugabe von Antiblockmitteln zu Dispersionspulvern besteht darin, dieses in einer getrennten Apparatur dem getrockneten Dispersionspulver zuzugeben.

Die genannten Verfahrensweisen haben folgende Nachteile: Bei der Zugabe des Antiblockmittels während der Sprühtrocknung, in der zu trocknenden wäßrigen Mischung kann das Antiblockmittel seine Wirkung nicht voll entfalten, da es, wie die Organosiliciumverbindung in mikroverkapselter Form vorliegt bzw. im wasserlöslichen Organopolymer eingebettet ist. Gibt man die Gesamtmenge Antiblockmittel von oben getrennt davon zu, dann wird ein erheblicher Teil des Antiblockmittels vom ausströmenden Luftstrom mitgerissen und muß mit aufwendigen Luftfilteranlagen zurückgehalten werden. Bei der Zumischung der Gesamtmenge des Antiblockmittels vor Austritt des getrockneten Pulvers, mit der zur Förderung des getrockneten Pulvers zugeführten Kaltluft, treten durch das blockende Pulver erhebliche Verkrustungen und Ablagerungen an der Trocknerwand, am Konus und am Austrittsrohr des Trockenturms auf, was zu langen Stand und Reinigungszeiten führt. Die Zumischung des Antiblockmittels nach der Trocknung in einer separaten Apparatur führt ebenfalls zu Verkrustungen und Ablagerungen in der Mischapparatur.

Es bestand daher die Aufgabe ein Verfahren zur Herstellung von redispergierbaren, Organosiliciumverbindungen enthaltenden Pulvern zur Verfügung zu stellen, mit welchem mit möglichst geringen Antiblockmittel-Mengen, rieselfähige und blockfeste Pulver erhalten werden, ohne daß die obengenannten Nachteile auftreten.

Gegenstand der Erfindung ist ein Verfahren zur Herstellung von in Wasser redispergierbaren, Organosiliciumverbindungen enthaltenden Pulverzusammensetzungen durch Sprühtrocknung eines wäßrigen Gemisches, enthaltend eine oder mehrere Organosiliciumverbindungen und ein oder mehrere wasserlösliche Organopolymeren, in Gegenwart von Antiblockmittel, dadurch gekennzeichnet, daß ein Teil des Antiblockmittels gleichzeitig mit dem wäßrigen Gemisch, aber getrennt von diesem in den oberen Teil des Trockners eingespeist wird und die Restmenge des Antiblockmittels dem getrockneten Pulverstrom zugeführt wird, solange dieser noch im Gasstrom suspendiert ist, oder die Restmenge des Antiblockmittels dem getrocknetem Pulver zugemischt wird.

Dadurch, daß ein Teil des Antiblockmittels kontinuierlich im oberen Teil des Trockners, aber getrennt von der zu trocknenden Mischung zugegeben wird, lassen sich die Verkrustungen und Ablagerungen an der Trocknerwand weitgehend vermeiden. Durch die Zugabe des anderen Teils des Antiblockmittels zum getrockneten Pulverstrom oder zum getrockneten Pulver erreicht man, daß auch die Feinanteile des Antiblockmittels im Produkt verbleiben bzw. nicht mit der Feuchtluft ausgetragen werden, was eine deutliche Verbesserung der Blockfestigkeit zur Folge hat.

Die Sprühtrocknung kann in beliebigen zur Sprühtrocknung von Flüssigkeiten geeigneten und bereits vielfach bekannten Vorrichtungen, beispielsweise solchen mit mindestens einer Drallzerstäuberdüse oder mit einer rotierenden Zerstäuberscheibe, in einem vorzugsweise erwärmten Trockengasstrom, wie etwa Luft oder Stickstoff, durchgeführt werden.

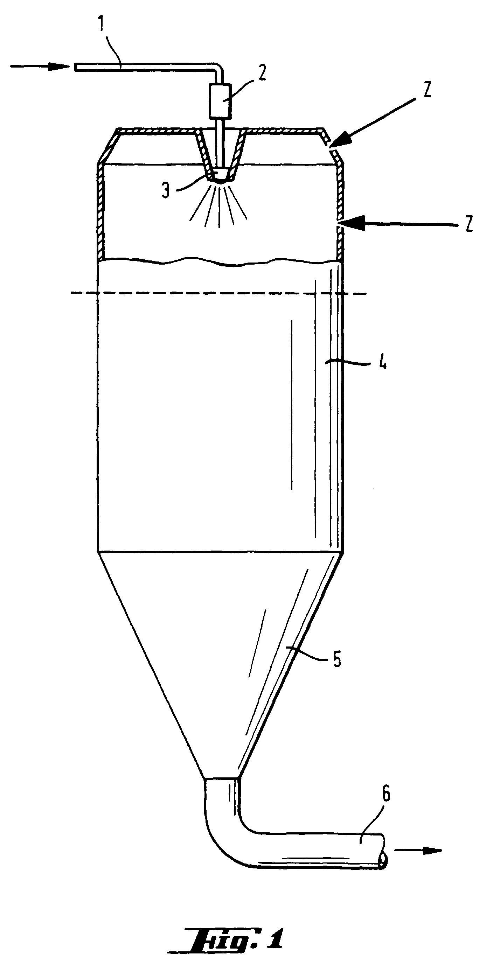

Die Sprühtrockner haben im allgemeinen die Form gemäß Figur 1, nämlich die eines stehenden Zylinders, an dessen oberen Ende sich die Sprühvorrichtung befindet. Der zylindrische Teil 4 entspricht dem Trocknungsraum, welcher meist durch einen Auslauftrichter 5 abgeschlossen wird. Am oberen Ende bzw. oberhalb des zylindrischen Teils 4 wird die zu trocknende Dispersion über eine Leitung 1, gegebenenfalls über einen Filter 2, zusammen mit Preßluft in die Sprüheinrichtung 3 geführt und versprüht. Die trockenen Teilchen setzen sich ab oder werden mit Luft über Leitung 6 zu Abscheidevorrichtungen weiter transportiert. Die Abscheidevorrichtungen sind in Figur 1 nicht dargestellt.

Von der Wirkung der Sprüheinrichtung hängen weitgehend die Trocknungsgeschwindigkeit und die Eigenschaften des Fertiggutes ab. Für das beanspruchtete Verfahren eignen sich sowohl Einstoff-, Zweistoff- und Mehrstoffdüsen als auch rotierende Versprüher. Bevorzugt werden bei diesem Verfahren Gleichstromsprühtrockner verwendet.

Enthalten die zu versprühenden Gemische organische Lösungsmittel, wie Toluol oder Xylol, so wird die Sprühtrocknung bevorzugt mit Stickstoff als Trockengasstrom durchgeführt. Dabei können aus dem Trockengasstrom Wasser und andere verdampfte Stoffe auskondensiert und das Gas zurückgeführt werden.

Vorzugsweise beträgt die Eintrittstemperatur des Trockengasstromes 80°C bis 250°C, insbesondere 110°C bis 190°C und die Austrittstemperatur des beim Trocknen gebildeten Gasstromes 40°C bis 100°C, insbesondere 50°C bis 90°C.

Das Antiblockmittel oder ein Gemisch von Antiblockmitteln wird getrennt von dem der Sprühtrocknung zugeführten wäßrigen Gemisch in die Vorrichtung, in der die Sprühtrocknung stattfindet, eingeführt. Bevorzugt wird das Antiblockmittel in Mengen von 3 bis 30 Gew%, besonders bevorzugt von 5 bis 20 Gew%, bezogen auf das Gesamtgewicht von Organosiliciumverbindung und wasserlöslichem Polymer, zugegeben.

Bei der erfindungsgemäßen Verfahrensweise wird ein Teil des Antiblockmittels, vorzugsweise mittels Heißluft, im oberen Drittel des Sprühtrockners zugeführt. Dies entspricht dem Bereich, der in Figur 1 in Höhe der oder oberhalb der gestrichelten Linie liegt. Bevorzugte Bereiche zur erfindungsgemäßen Zugabe in den oberen Teil des Sprühtrockners sind in Figur 1 mit Pfeilen und Z für Zugabe wiedergegeben. Vorzugsweise werden 20 bis 50 Gew% des Antiblockmittels im oberen Drittel des Trockners zugeführt.

Die Restmenge an Antiblockmittel wird, solange das Pulver noch im Gasstrom suspendiert ist, zudosiert oder man mischt diese in das fertige Pulver in einer getrennten Mischeinrichtung ein. Vorzugsweise wird die Restmenge an Antiblockmittel mit der Förderluft, welche das Pulver in die dem Trockenturm nachgeschaltete Abscheidevorrichtung fördert, gegebenenfalls mit weiteren Zusätzen, eingebracht.

Die zur Herstellung der erfindungsgemäßen Pulver oder bei dem erfindungsgemäßen Verfahren verwendeten organischen Siliciumverbindungen können beispielsweise solche der Formel RₐSi(OR¹)₄₋ₐ sein, wobei R Wasserstoff, einen einwertigen Kohlenwasserstoffrest, der mindestens einen gegenüber Wasser bei der jeweiligen Trocknungstemperatur inerten Substituenten aufweisen kann, R¹ gleiche oder verschiedene Alkyl- oder Alkoxyalkylenreste mit jeweils 1 bis 4 Kohlenstoffatomen je Rest und a 0 bis 4, bevorzugt bis 3 bedeutet mit der Maßgabe, daß derartige Silane einen Siedepunkt von mindestens 150°C bei 1020 hPa (abs.) aufweisen.

Die zur Herstellung der erfindungsgemäßen Pulver oder bei dem erfindungsgemäßen Verfahren verwendeten organischen Siliciumverbindungen können beispielsweise auch Teilhydrolysate oder Hydrolysate oder flüssige oder lösliche, feste Kondensate der vorstehend genannten Silane bzw. Silangemische sein.

Vorzugsweise enthalten die organischen Reste R höchstens 18 Kohlenstoffatome je Rest. Beispiele für Kohlenwasserstoffreste R sind Alkylreste, wie der Methyl-, Ethyl-, n-Propyl-, Isopropyl- und 2-Ethylhexylrest sowie Hexyl- und Octadecylreste, Cycloalkylreste, wie der Cyclohexylrest; Arylreste, wie der Phenylrest; Arylalkylreste, wie der Benzylrest. Die genannten Reste R können auch mit Halogenen, wie F oder Cl, mit Äther, Thioäther-, Ester-, Amid-, Nitril-, Hydroxyl-, Amin-, Epoxid-, Carboxyl-, Sulfonsäure-, Carbonsäureanhydrid- und Carbonylgruppen substituiert sein können. Weiter können die Reste R auch einen oder mehrere ungesättigte Kohlenstoffbindungen aufweisen.

Beispiele für substituierte Kohlenwasserstoffreste R sind halogenierte Kohlenwasserstoffreste, wie der 3,3,3-Trifluorpropylrest, 3-Chlorpropylrest sowie Chlorphenylreste, 3-Hydroxypropyl und 3-Aminopropylreste; Mercaptoalkylreste, wie der 3-Mercaptopropylrest; und Acyloxyalkylreste, wie der 3-Methacryloxypropylrest. Ferner Kohlenwasserstoffreste mit mindestens einer aliphatischen Kohlenstoff-Doppelbindung, wie z.B. der Vinyl- oder der Butadienylrest. Vor allem seien hier die Verbindungen der allgemeinen Formeln genannt:

CH₂=CH-(CH₂)₀₋₈-SiR³ ₐ(OR⁴),

CH₂=CR⁵-CO₂-(CH₂)_{b}-SiR³ ₐ(OR4)₃₋ₐ,

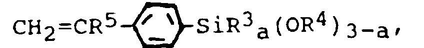

HS(CH₂)_{b}-SiR³ ₐ(OR⁴)₃₋ₐ,

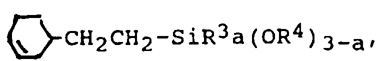

mit a=0-2, b=1-6, R³=CH₃, C₆H₅, R⁴=H, CH₃, C₂H₅, C₃H₇, C₆H₅, (CH₂)₂₋₃-O-(CH₂)₁₋₂ H und R⁵=H, CH₃.

Beispiele für Alkylreste R¹ sind der Methyl-, Ethyl-, n-Propyl-, Isopropyl-, n-Butyl-, sec.-Butyl- und tert.-Butylrest. Wichtige Beispiele für einen Alkoxyalkylenrest sind der Methoxyethylenrest und die 1-Methoxy-2-oxypropylrest.

Bevorzugte Organosiliciumverbindungen sind:

Tetraethoxysilan, Methyltripropoxysilan, Methyltri(ethoxy)silan, γ-Chlorpropyltriethoxysilan, β-Nitrilethyltriethoxysilan, γ-Mercaptopropyltriethoxy- und -trimethoxysilan, Phenyltriethoxysilan, n- und iso-Octyltriethoxysilan, Dipropyldiethoxysilan, Triphenylsilanol sowie deren vorzugsweise flüssigen Kondensationsprodukte, ggf. mit anderen niedrigsiedenden und/oder wasserlöslichen Silanen, wie Methyltrimethoxysilan, γ-Aminopropyltriethoxysilan oder anderen Aminofunktionen enthaltenden Silanen, quartäre Ammoniumsalzgruppen enthaltenden Silanen, Epoxigruppen enthaltenden Silanen, Carbonsäure- und Carbonsäureanhydridfunktionellen Silanen.

Bevorzugte Organopolysiloxane sind:
Das Organopolysiloxan der Summenformel CH₃Si(OC₂H₅)_{0,8}O_{1,1} mit einem durchschnittlichen Molekulargewicht von etwa 600 g/Mol und einer Viskosität von etwa 20 mm²·s⁻¹ bei 25°C; das Organopolysiloxan der Summenformel CH₃Si(OCH₃)_{0,8}O_{1,1} mit einem durchschnittlichen Molekulargewicht von etwas 650 g/Mol und einer Viskosität von etwa 30 mm²·s⁻¹ bei 25° C; das Organopolysiloxan der Formel C₆H₅Si(OC₂H₅)_{0,72}O_{1,14} mit einem durchschnittlichen Molekulargewicht von etwas 3000 g/Mol und einer Viskosität von etwa 25 000 mm²·s⁻¹ bei 25°C; das Organosiloxan der Formel R²Si(OCH₃)₂O_{0,5} worin 70 % der Anzahl der Reste R² Methylgruppen und 30 % der Anzahl der Reste R² 2-Ethylhexylgruppen sind; und ein durch Trimethylsiloxygruppen endblockiertes Methylhydrogenpolysiloxan mit einer Viskosität von etwa 20 mm²·s⁻¹ bei 25°C.

Ein weiteres Beispiel für Organopolysiloxane ist ein im Handel erhältliches Mischpolymerisat aus 15,8 Molprozent C₆H₅SiO_{3/2}-, 42,1 Molprozent (C₆H₅) CH₃SiO_{2/2}-, 27,7 Molprozent (CH₃)₂SiO_{2/2} und 14,4 Molprozent (CH₃)₃SiO_{1/2}-Einheiten mit einer Viskosität von 200 mm²·s⁻¹ bei 25°C.
Genannt seien ferner Klebeharze, wie z.B. die MQ-Harze wie z.B. REN 82 (Markenname der Wacker-Chemie).

Weitere Beispiele für Organopolysiloxane sind durch Hydroxydimethylsiloxygruppen oder/und Ethoxydimethylsiloxygruppen oder Trimethylsiloxygruppen oder γ-Hydroxypropyl- oder γ-Aminopropyl- oder Vinyl- oder Hydrogendimethylsiloxygruppen endblockierte Dimethylpolysiloxane oder Methylphenylpolysiloxane.

Die bei dem erfindungsgemäßen Verfahren verwendeten organischen Siliciumverbindungen können beispielsweise auch durch Trimethylsiloxygruppen endblockierte Methylhydrogenpolysiloxane oder durch Trimethylsiloxygruppen endblockierte Mischpolymere aus Dimethylsiloxan- und Methylhydrogensiloxaneinheiten sein.

Weitere geeignete Siliciumverbindungen sind in Wasser dispergierbare Di- und Polysilane, Carbosilane, Polycarbosilane und Polysilylendisiloxane deren Siedepunkt bei Normaldruck >150° C liegt. Beispielsweise seien genannt: Die Disilane Dimethyltetraalkoxydisilan, Tetramethyldialkoxydisilan, Trimethyltrialkoxydisilan oder deren im allgemeinen aus den entsprechenden Chlorverbindungen erhältlichen (Co)kondensate. Polysilane der allgemeinen Formel R₃Si(SiR₂)ₙSiR₃ mit n von 1 bis 500, bevorzugt bis 8, wobei R auch OR¹ darstellen kann und R und R¹ die gleiche Bedeutung wie oben aufgeführt haben können.

Bei dem erfindungsgemäßen Verfahren können die genannten Organosiliciumverbindung einzeln oder auch im Gemisch eingesetzt werden. Lassen sich etwa Organosiliciumverbindungen wegen ihrer hohen Viskosität nur schlecht emulgieren, oder sind sie bei der zur Emulgierung vorgesehenen Temperatur fest, dann können sie entweder durch Mischen mit bzw. Lösen in niederviskosen Siliciumverbindungen auf die gewünschte Viskosität gebracht werden. Alternativ dazu können hochviskose Organosiliciumverbindungen in geeigneten organischen Lösemitteln, wie z.B. Toluol, Gemischen aus Xylolisomeren, Cyclohexan, Petroläther, Diacetonalkohol, Butylacetat gelöst werden.

Die Herstellung der genannten Organosiliciumverbindungen ist bekannt und kann nach Verfahren erfolgen wie sie in Noll, Chemie und Technologie der Silicone, 2. Auflage 1968, Weinheim und Houben-Weyl, Methoden der organischen Chemie, Band E 20, S. 1782 f, 2219 f, Georg Thieme Verlag, Stuttgart, 1987 beschrieben sind.

Die wasserlöslichen Polymere werden bevorzugt in Mengen von 5 bis 40 Gew%, besonders bevorzugt 7 bis 20 Gew%, bezogen auf das Gesamtgewicht der zur Herstellung des jeweiligen Pulvers eingesetzten Siliciumverbindung(en), eingesetzt.

Als wasserlösliche Polymere sollen im Rahmen der vorliegenden Erfindung solche organischen Polymere verstanden werden, die bei Raumtemperatur und dem Druck der umgebenden Atmosphäre mindestens zu 1 Gew% in Wasser löslich sind.

Als erfindungsgemäß einzusetzende wasserlösliche filmbildende Polymere sind durch Verseifung von Polyvinylacetat hergestellte Polyvinylalkohole mit einer Verseifungszahl (= Menge an KOH in mg, die zur Verseifung der restlichen Acetatgruppen erforderlich sind) von 100 bis 240 und einem viskosimetrisch ermittelten Molekulargewicht von 15 000 bis 100 000 bevorzugt.

Weitere Beispiele für wasserlösliche Polymere, die zur Herstellung der redispergierbaren Pulver eingesetzt werden können, sind teilweise hydrolysierte, mit Aminogruppen, Carbonsäuregruppen sowie Alkylgruppen modifizierte Polyvinylacetatpolymere; Vinylpyrrolidon-Polymere, insbesondere Polyvinylpyrrolidone mit einem Molekulargewicht von 5 000 bis 400 000; Stärken und Stärkederivate, wie hydroxyalkylierte Stärken, sulfatierte Stärken, phosphatierte Stärken, Stärken, die sowohl sulfatiert als auch phosphatiert sind, Carboxymethylstärken, abgebaute Stärken, z.B. Dextrine, wasserlösliche Polyacrylate; wasserlösliche Polymethacrylate, wasserlösliche Poly(meth)acrylamide, Polymaleinate, Polyvinylsulfonate; wasserlösliche Celluloseether, wie Carboxymethylcellulosen, Hydroxyalkylcellulosen, Methylcellulosen, Cellulosemischether; wasserlösliche Proteine, wie Casein, Sojaproteine und Gelatine; Copolymere aus Styrol und Maleinsäure sowie Styrol und Fumarsäure; Kondensationsprodukte aus sulfonierten Phenolen, Harnstoff, weiteren organischen Stickstoff-Basen und Formaldehyd; wasserlösliche Alkali- und Erdalkalisalze von Naphthalinsulfonsäure-Formaldehyd-Kondensationsprodukten und von Phenolsulfonsäure-Formaldehyd-Kondensationsprodukten.

Will man die Redispergierbarkeit vermindern, verwendet man zumindest als zusätzliche Schutzkolloide die Ammoniumsalze von Copolymeren aus Styrol und Maleinsäure und/oder Fumarsäure, von Kondensationsprodukten aus sulfonierten Phenolen oder Naphthalinen mit Formaldehyd oder von anderen auf Grund der Ammoniumsalzgruppe wasserlöslichen, filmbildenden Polymeren. Auch wasserlösliche Proteine, die unter den Herstellungs- und Anwendungsbedingungen verhornen sind hierfür geeignet.

Die erfindungsgemäß eingesetzten wasserlöslichen Polymere sind handelsübliche Produkte bzw. können nach in der organischen Chemie gängigen Methoden hergestellt werden.

Als Antiblockmittel geeignet sind anorganische, feste Stoffe mit mittleren Teilchengrößen von 0,01 bis 50 µm. Zum Beispiel Aluminiumsilicate, kolloidales Siliciumdioxidgel, pyrogen erzeugten Siliciumdioxid, gemahlene Tone, Perlite, Vermiculite, Leichtspat, Talkum, Zemente, Kreidepulver, Calcium/Magnesium-Mischcarbonate oder Diatomeenerde.

Zusätzlich zu wasserlöslichen Polymeren, Organosiliciumverbindungen und Antiblockmitteln können zur Herstellung der redispergierbaren Pulverzusammensetzungen weitere Stoffe mitversprüht werden oder während oder nach der Sprühtrocknung zugegeben werden. Beispiele für solche weiteren Stoffe sind mit Wasser nicht mischbare Lösungsmittel, wie Toluol, ionogene und nichtionogene Emulgatoren, wie Natriumlaurylsulfat, Fungicide, Antischaummittel, Farbstoffe, Pigmente, Füllstoffe wie Kreidepulver, Calciumcarbonat und Quarzmehl. Die genannten Zusatzstoffe werden normalerweise jeweils in Mengen von 0,1 bis 30 Gew%, bezogen auf Organosiliciumverbindung, verwendet.

In den zu versprühenden Gemischen beträgt die Menge an Wasser vorzugsweise 45 bis 95 Gew%, bezogen auf das Gesamtgewicht des zu versprühenden Gemisches.

Die erfindungsgemäß hergestellten Pulver können überall eingesetzt werden, wo die Verwendung von in Wasser emulgiertem oder in Wasser emulgierbaren Siliciumverbindungen z.B. aufgrund ihrer hydrophobierenden Wirkung, ihrem Charakter als Bindemittel sowie ihrer guten Wasserdampfdurchlässigkeit zweckmäßig ist. Die Pulver können im trockenen Zustand oder in mit Wasser verdünnter Form beispielsweise als Zusätze zu Lehm, Gips, Putzen, Beton, einschließlich Gas- oder Schaumbeton verwendet werden; oder in zur Herstellung von Kalksandsteinen verwendeten Gemischen verwendet werden; oder in Anstrichfarben verwendet werden. Sie können beispielsweise auch zur Oberflächenhydrophobierung von Schüttgütern, wie Perliten (Blählava), Vermiculiten (Blähglimmer) oder Gasbetongranulaten verwendet werden. Sie eignen sich auch als Antischaummittel zur Verhütung oder Bekämpfung von Schaum in wäßrigen Medien.

Weiterhin können die erfindungsgemäßen oder erfindungsgemäß hergestellten Pulver in mit Wasser verdünnter Form als Bindemittel für feinteilige anorganische Stoffe, wie Sand, oder organische Stoffe, wie Holzmehl, verwendet werden. Schließlich können die erfindungsgemäßen oder erfindungsgemäß hergestellten Pulver auch als Zusätze für Klebstoffe verwendet werden.

### Beispiel 1:

325 g eines Organopolysiloxan der Formel CH₃Si(OC₂H₅)_{0,8}O_{1,1} mit einem durchschnittlichen Molekulargewicht von etwa 600 und einer Viskosität von etwa 20 mm²·s⁻¹ bei 25°C wurden mit 300 g einer 10 %-igen, wäßrigen Lösung eines Polyvinyl-alkohols mit einem Hydrolysegrad von 87,5 Molprozent (Molekulargewicht 25 000, Viskosität bei 20°C in 4 %-iger wäßriger Lösung von 5 mPa·s) zu einer Emulsion vermischt. Zu dieser Emulsion wurden 130 g Wasser zugemischt und in die steife Öl in Wasser Emulsion weitere 325 g des Organopolysiloxans zugegeben. Die so erhaltene Mischung wurde mit 650 g einer 10%-igen wäßrigen Polyvinylalkohol-Lösung (Verseifungszahl 190, Molekulargewicht 26000) verdüst.

Die Verdüsung wurde in einem Gleichstrom-Sprühtrockner durchgeführt, wobei die Emulsion zusammen mit der Polyvinylalkohol-Lösung in die am oberen Ende des Sprühturms (Nubilosa AJM 014) angeordnete Drallzerstäuberdüse gefördert und bei einem Düsendruck von 5200 hPa (abs.), einem Durchsatz von 2,5 l/h mit Luft (Lufteintrittstemperatur 170°C) verdüst wurde. Gleichzeitig wurden am oberen Ende des Sprühturms mittels Preßluft 30 g Ca/Mg-Carbonat zudosiert (4 Gew% bezogen auf Organopolysiloxan und Polyvinylalkohol). Das getrocknete Pulver/Luft-Gemisch trat mit einer Temperatur von 85°C in ein Sammelgefäß aus. Das dort abgeschiedene Pulver wurde mit weiteren 45 g Ca/Mg-Carbonat (6 Gew% bezogen auf Organopolysiloxan und Polyvinylalkohol) vermischt.

Die Qualität des Pulvers wurde über die Bestimmung der Rieselfähigkeit und der Blockfestigkeit beurteilt.

Zur Bestimmung der Rieselfähigkeit wurde gemäß DIN 53916 in einem trichterförmigen Gefäß mit 50 ml Inhalt und einer Auslaufdüse mit einem Durchmesser von 8 mm das zu untersuchende Pulver eingefüllt und mit einem Glasstab die Oberfläche glatt abgestreift. Nach dem Öffnen der Auslaufklappe wurde die Auslaufzeit des Pulvers im Trichter bestimmt. Die Rieselfähigkeit wurde qualitativ beurteilt.

Zur Bestimmung der Blockfestigkeit wurde das Dispersionspulver in ein Eisenrohr mit Verschraubung gefüllt und danach mit einem Metallstempel mit mm-Gradierung belastet. Nach Ablesen der Eindringtiefe des Metallstempels mittels der mm-Gradierung wird im Trockenschrank 16 Stunden bei 50°C gelagert. Nach dem Abkühlen auf Raumtemperatur wurde die Eindringtiefe des Metallstempels abgelesen, das Pulver aus dem Rohr entfernt und die Blockstabilität qualitativ durch Zerdrücken des Pulvers bestimmt.
Die Blockstabilität wurde wie folgt klassifiziert:
A = blockstabil
B = mäßig blockstabil
C = nicht blockstabil.

In Beispiel 1 wurde ein gut rieselfähiges Pulver mit hoher Blockstabilität erhalten (Blockstabilität A).

### Vergleichsbeispiel 1:

Es wurde analog Beispiel 1 vorgegangen, mit dem Unterschied, daß die Verdüsung ohne Zusatz von Antiblockmittel durchgeführt wurde, und auch nach der Sprühtrocknung dem Pulver kein Antiblockmittel zugegeben wurde. Es resultierte ein Pulver mit einer Restfeuchte von 1.5 %, welches zwar rieselfähig, aber nicht blockstabil (Blockstabilität C) war.

### Vergleichsbeispiel 2:

Es wurde analog Beispiel 1 vorgegangen, mit dem Unterschied, daß die Gesamtmenge von 75 g an Antiblockmittel von oben in den Trockner zudosiert wurde. Die Rieselfähigkeit verbesserte sich gegenüber Vergleichsbeispiel 1, desgleichen auch die Blockstabilität, die aber mit B - C deutlich niedriger als in Beispiel 1 war.

### Vergleichsbeispiel 3:

In das im Vergleichsbeispiel 1 erhaltene Pulver wurde die Gesamtmenge von 75 g Antiblockmttel nach der Trocknung dem trockenen Pulver zugemischt. Gegenüber Vergleichsbeispiel 1 und 2 war die Rieselfähigkeit verbessert. Die Blockfestigkeit verbesserte sich auch, war aber mit einem Wert von B nicht ausreichend und deutlich niedriger als in Beispiel 1.

### Vergleichsbeispiel 4:

Es wurde analog Beispiel 1 vorgegangen, mit dem Unterschied, daß kein Antiblockmittel am oberen Ende des Sprühtrockners zudosiert wurde. Die Gesamtmenge an Ca/Mg-Carbonat wurde dagegen mit der Förderluft eingebracht, welche das Pulver nach Austritt aus dem Trocknungsturm in die nachgeschaltete Abscheidevorrichtung fördert. Man erhielt ein Pulver dessen Rieselfähigkeit der des Produkts aus Vergleichsbeispiel 3 entsprach. Die Blockfestigkeit wurde mit B eingestuft.

### Beispiel 2:

Das Beispiel 1 wurde dahingehend abgeändert, daß anstelle der 650 g des Organopolysiloxans die gleiche Menge eines Gemisches aus 2 Gew.-Teilen des Organopolysiloxans aus Beispiel 1 und 1 Gew.-Teil Isooctyltriethoxysilan sprühgetrocknet wurden. Während der Sprühtrocknung wurden die 75 g des Antiblockmittels (Ca/Mg-Carbonat) zur Hälfte analog Beispiel 1 von oben her dosiert und zur Hälfte im unteren Teil des Trockners zusammen mit der Kaltluft zugegeben.

Es wurde ein Pulver mit guter Rieselfähigkeit und einer hohen Blockfestigkeit des Wertes A erhalten.

### Vergleichsbeispiel 5:

Der im Beispiel 2 beschriebene Versuch wurde wiederholt, jedoch wurde die Gesamtmenge an Antiblockmittel getrennt von dem wäßrigen Organosilicium/Polyvinylalkohol-Gemisch von oben dosiert. Die Rieselfähigkeit des erhaltenen Pulvers war ausreichend, die Blockstabilität mit dem Wert C dagegen nicht und deutlich niedriger als in Beispiel 2.

### Beispiel 3:

In einer Lösung von 200 g durch teilweise Verseifung von Polyvinylacetat hergestelltem Polyvinylalkohol mit einer Verseifungszahl von 190, und einem Molekulargewicht von etwa 26000 in 4660 g Wasser wurden 1260 g durch Hydroxyldimethylgruppen endblockiertes Dimethylpolysiloxan mit einer Viskosität von 1500 mm²·s⁻¹ bei 25° C einemulgiert. Die so erhaltene Emulsion wurde bei einem Düsendruck von 4 300 hPa (abs.), einem Durchsatz von 2 l/h, einer Lufteintrittstemperatur von 165° C und einer Gasaustrittstemperatur von 85° C in ein Pulver umgewandelt. 25 g Aluminiumsilikat wurden am oberen Ende und die restlichen 50 g Aluminiumsilikat im unteren Teil des Trockners zusammen mit der Kaltluft eindosiert. Die Rieselfähigkeit des Pulvers war gut, die Blockstabilität mit A sehr gut.

### Vergleichsbeispiel 6:

Das Beispiel 3 wurde wiederholt mit der Änderung, daß die Gesamtmenge an Aluminiumsilikat während der Sprühtrocknung von oben her dosiert wurde.
Die Rieselfähigkeit des erhaltenen Pulvers war gut, die Blockstabilität mit C nicht ausreichend.

## Patentansprüche

1. Verfahren zur Herstellung von in Wasser redispergierbaren, Organosiliciumverbindungen enthaltenden Pulverzusammensetzungen durch Sprühtrocknung eines wäßrigen Gemisches, enthaltend eine oder mehrere Organosiliciumverbindungen und ein oder mehrere wasserlösliche Organopolymeren, in Gegenwart von Antiblockmittel, dadurch gekennzeichnet, daß ein Teil des Antiblockmittels gleichzeitig mit dem wäßrigen Gemisch, aber getrennt von diesem im oberen Drittel des Trockners eingespeist wird und die Restmenge des Antiblockmittels dem getrockneten Pulverstrom zugeführt wird, solange dieser noch im Gasstrom suspendiert ist, oder die Restmenge des Antiblockmittels dem getrockneten Pulver zugemischt wird.

2. Verfahren nach Anspruch 1, dadurch gekennzeichnet, daß das Antiblockmittel oder ein Gemisch von Antiblockmitteln zu 20 bis 50 Gew%, bezogen auf das Gesamtgewicht des Antiblockmittels, im oberen Drittel des Trockners eingespeist wird.

3. Verfahren nach Anspruch 1 oder 2, dadurch gekennzeichnet, daß die Restmenge an Antiblockmittel mit der Förderluft, welche das Pulver in die dem Trockner nachgeschaltete Abscheidevorrichtung fördert, eingebracht wird.

## Claims

1. Process for preparing water-redispersible powder compositions comprising organosilicon compounds by spray drying an aqueous mixture comprising one or more organosilicon compounds and one or more watersoluble organic polymers, in the presence of antiblocking agents, characterized in that part of the antiblocking agent is fed in in the upper third of the dryer simultaneously with the aqueous mixture but separately from the latter and the remainder of the antiblocking agent is introduced into the dried powder stream while this is still suspended in the gas stream, or the remainder of the antiblocking agent is mixed into the dried powder.

2. Process according to Claim 1, characterized in that from 20 to 50% by weight of the antiblocking agent or a mixture of antiblocking agents, based on the total weight of the antiblocking agent, is fed in in the upper third of the dryer.

3. Process according to claim 1 or 2, characterized in that the remainder of the antiblocking agent is introduced together with the air which conveys the powder into the separator installed downstream of the dryer.

## Revendications

1. Procédé pour la préparation de compositions de poudre contenant des composés organosiliciés redispersables dans l'eau par séchage par pulvérisation d'un mélange aqueux, contenant un ou plusieurs composés organosiliciés et un ou plusieurs organopolymères solubles dans l'eau, en présence d'un agent antiblocage, caractérisé en ce qu'une partie de l'agent antiblocage est introduite simultanément avec le mélange aqueux, mais de manière séparée de celui-ci dans le tiers supérieur du sécheur, et la quantité résiduelle de l'agent antiblocage est amenée dans le flux de poudre séché, tant que celui-ci est encore en suspension dans le flux gazeux, ou la quantité résiduelle de l'agent antiblocage est mélangée à la poudre séchée.

2. Procédé suivant la revendication 1, caractérisé en ce que de 20 à 50% en poids de l'agent antiblocage ou un mélange d'agents antiblocage, sur base du poids total de l'agent antiblocage, est introduit dans le tiers supérieur du sécheur.

3. Procédé suivant la revendication 1 ou 2, caractérisé en ce que la quantité résiduelle d'agent antiblocage est introduite avec l'air de transport, qui véhicule la poudre dans le dispositif de séparation placé en aval du sécheur.
